# EUROPÄISCHE PATENTSCHRIFT

(11) **EP 1 266 824 B1**
(45) Veröffentlichungstag und Bekanntmachung des Hinweises auf die Patenterteilung: **08.09.2004**
(21) Anmeldenummer: 02012910.2
(22) Anmeldetag: 11.06.2002
(51) Int. Cl.: B64C 21/10

(54) **Von einem Strömungsmedium umströmtes Bauteil insbesondere für ein Flugzeug**
Body, especially aircraft component, exposed to flow stream
Corps, en particulier constituant une partie d'avion, disposé dans un courant de fluide

(30) Priorität: 16.06.2001 DE 10129173
(43) Veröffentlichungstag der Anmeldung: 18.12.2002
(73) Patentinhaber: Airbus Deutschland GmbH, 21129 Hamburg (DE)
(72) Erfinder: Zabka, Werner, Dr.-Ing., 21614 Buxtehude (DE)
(74) Vertreter: Hansmann, Dierk, Dipl.-Ing.

(56) Entgegenhaltungen:
- EP-A- 1 167 187
- US-A- 4 706 910
- US-A- 5 236 155

## Beschreibung

Die Erfindung betrifft ein von einem Strömungsmedium umströmtes Bauteil insbesondere für ein Flugzeug, vorzugsweise Tragflügel, Höhen- bzw. Seitenleitwerk, Rumpfschale oderdergleichen.

Der Reibungswiderstand moderner Verkehrsflugzeuge beträgt ungefähr 50% des Gesamtwiderstandes und verursacht somit auch 50% des Treibstoffverbrauches. Technische Lösungen zur Reduktion des Reibungswiderstandes zielen auf eine Erhöhung der Laminarität und eine Beruhigung der Turbulenz der Strömung wie z. B. durch Turbulenzmanagement mittels Riblets oder Hybridlaminarisierung durch Absaugung. Sie alle sind abgeleitet aus der klassischen Strömungstheorie, mit der allerdings keine Aussage darüber gemacht wird, wie der Widerstand als diskrete Wechselwirkung zwischen strömendem Teilchen und der umströmtem Wand entsteht. Die physikalischen Mechanismen dieser Wechselwirkung und damit das Zustandekommen der Reibung sind bis heute nicht endgültig geklärt.

In der US 4,706,910 ist ein kombiniertes Ribelt- und Luftwiderstandsreduzierungssystem für aerodynamische und hydrodynamische Oberflächen beschrieben, welches ein Abbrechen von großen Strömungsstörungen in der Grenzschicht der umströmten Oberflächen bewirkt. Die Riblets werden durch longitudianale Furchen in Form von geformten Rillen gebildet und dienen dazu, die Störungen in der Nähe der Grenzschicht zu reduzieren. Hierbei handelt es sich Bauelemente, deren charakteristische Abmessungen sich im Mikrometerbereich bewegen.

Weiterhin ist aus der US 5,236,155 ein Verfahren zur Reduzierung des Luftwiderstandes in aerodynamischen Systemen bekannt, wobei eine Grenzschicht-Verdickung mit einer laminaren Strömungsabsaugung kombiniert ist. Bei diesem Verfahren werden eine Vielzahl von Turbinen, Grenzschicht-Kompressoren und Kompressordüsen benötigt.

Die moderne Nanotribologie versucht das Phänomen der Reibung auf atomarer Ebene zu erklären und zeigt, daß die klassischen makroskopischen Gesetze der Reibung nicht ohne weiteres auf die atomare Ebene übertragen werden können. Sie zeigt, daß der Tangentialimpuls ("Reibung"), den ein Teilchen auf eine feste Oberfläche überträgt, unabhängig von der Normalkraft ist. Eine gaskinetische Interpretation der Reynolds-Zahl durch den Erfinder zeigt, daß im Nanobereich die Reynolds-Zahl ein Maß für die Anzahl der auf die umströmte Oberfläche diskret übertragenen Impulse ist und nicht für die Impulse selber. Theoretische Untersuchungen auf der Ba sis dieser Ergebnisse berechtigen zu der Hoffnung, daß ein erhebliches Potential zur Verminderung des Reibungswiderstandes zwischen strömenden Medien und festen Oberflächen besteht.

Der Erfindung liegt nun die Aufgabe zugrunde, die aus der modernen Nanotribologie gewonnenen Erkenntnisse zu nutzen und somit zur Verminderung des Reibungswiderstandes umströmter Bauelemente vorzugsweise für ein Flugzeug zu verwenden.

Die Aufgabe wird erfindungsgemäß dadurch gelöst, daß die mi dem Strömungsmedium in Berührung stehende Oberfläche des Bauteiles als ideal glatte Oberfläche ausgebildet ist, und daß alle Oberflächenatome in einer Gitterebene liegen.

Die Aufgabe wird erfindungsgemäß auch dadurch gelöst, daß die mit dem Strömungsmedium in Berührung stehende Oberfläch des Bauteiles partiell als ideal glatte Oberfläche ausgebil det ist, und daß alle Oberflächenatome dieser Oberfläche in einer Gitterebene liegen.

Ein wesentlicher Vorteil der Erfindung besteht darin, daß bei einer ideal glatten Oberfläche, bei der alle Oberflächenatome in einer Gitterebene liegen, kein laminar-turbulenter Übergang zwischen Strömungsmedium und umströmten Bauteil vorhanden ist. Die klassische Definition der "Reynolds-Zahl" verliert ihre Gültigkeit, da in diese die mittlere thermische Geschwindigkeit der Masseteilchen eingeht, die ein Maß für die Normalkraft eines strömenden Teilchens auf die Wandung des umströmten Bauteiles ist. Der von einem Teilchen auf diese Wandung übertragene Tangentialimpuls ist jedoch unabhängig von der Normalkraft. Somit läßt sich nach bisherigen Erkenntnissen bei Verwendung eines umströmten Bauteiles mit einer ideal glatten Oberfläche vorteilhafterweise eine Reduktion des Reibungswiderstandes von möglicherweise mehreren Zehner-Potenzen gegenüber einem Bauteil mit einer rauhen Oberfläche erreichen.

## Patentansprüche

1. Von einem Strömungsmedium umströmtes Bauteil insbesondere für ein Flugzeug, vorzugsweise Tragflügel, Höhen- bzw. Seitenleitwerk, Rumpfschale oderdergleichen, **dadurch gekennzeichnet, daß** die mit dem Strömungsmedium in Berührung stehende Oberfläche des Bauteiles als ideal glatte Oberfläche ausgebildet ist, und daß alle Oberflächenatem der Oberfläche in einer Gitterebene liegen.

2. Von einem Strömungsmedium umströmtes Bauteil insbesonder für ein Flugzeug, vorzugsweise Tragflügel, Höhen- bzw. Seitenleitwerk, Rumpfschale oderdergleichen, **dadurch gekennzeichnet, daß** die mit dem Strömungsmedium in Berührung stehende Oberfläche des Bauteiles partiell als idea glatte Oberfläche ausgebildet ist, und daß alle Oberflächenatome dieser Oberfläche in einer Gitterebene liegen.

## Claims

1. Structural part in particular for an aircraft, preferably a wing, elevator unit, rudder unit, fuselage shell or the like, which is swept by a flow medium, **characterized in that** the surface of the structural part in contact with the flow medium is designed as an ideally smooth surface, and that all of the surface atoms of the surface lie in one atomic plane.

2. Structural part in particular for an aircraft, preferably a wing, elevator unit, rudder unit, fuselage shell or the like, which is swept by a flow medium, **characterized in that** the surface of the structural part in contact with the flow medium is designed partially as an ideally smooth surface, and that all of the surface atoms of said surface lie in one atomic plane.

## Revendications

1. Elément entouré par un agent d'écoulement, en particulier pour un avion, et de préférence pour une aile porteuse, un empennage horizontal ou vertical, une coque de fuselage ou apparenté, **caractérisé en ce que** la surface de l'élément en contact avec l'agent d'écoulement a été conçue comme une surface idéalement plane, et **en ce que** tous les atomes superficiels de cette surface sont situés dans un plan réticulaire.

2. Elément entouré par un agent d'écoulement, en particulier pour un avion, et de préférence pour une aile porteuse, un empennage horizontal ou vertical, une coque de fuselage ou apparenté, **caractérisé en ce que** la surface de l'élément en contact avec l'agent d'écoulement a été conçue en partie comme une surface idéalement plane, et **en ce que** tous les atomes superficiels de cette surface sont situés dans un plan réticulaire.
